## Europäisches Patentamt
## European Patent Office
## Office européen des brevets

(11) Numéro de publication : **0 069 639**
**B1**

(12)
# FASCICULE DE BREVET EUROPÉEN

(45) Date de publication du fascicule du brevet :
**16.04.86**

(51) Int. Cl.⁴ : **F 02 M 31/16**

(21) Numéro de dépôt : **82401179.5**

(22) Date de dépôt : **25.06.82**

(54) Installation de réchauffage de combustible injecté dans un moteur diesel.

(30) Priorité : **08.07.81 FR 8113417**

(43) Date de publication de la demande :
**12.01.83 Bulletin 83/02**

(45) Mention de la délivrance du brevet :
**16.04.86 Bulletin 86/16**

(84) Etats contractants désignés :
**AT BE CH DE GB IT LI LU NL SE**

(56) Documents cités :
**EP-A- 0 017 123**
**US-A- 2 758 579**
**US-A- 2 991 777**
**US-A- 3 658 041**
**US-A- 3 768 454**
**US-A- 3 913 543**
**US-A- 3 989 019**

(73) Titulaire : **SCOMA-ENERGIE, Société dite:**
**11-13 Rue Forest**
**F-75018 Paris (FR)**

(72) Inventeur : **Redele, Jean Emile Amédée**
**90 Boulevard Malesherbes**
**F-75008 Paris (FR)**

(74) Mandataire : **Lavoix, Jean et al**
**c/o Cabinet Lavoix 2, Place D'Estienne D'Orves**
**F-75441 Paris Cedex 09 (FR)**

Jouve, 18, rue St-Denis, 75001 Paris, France

**Description**

La présente invention est relative à une installation de réchauffage du combustible, et en particulier du gas-oil injecté dans un moteur Diesel.

Le gas-oil utilisé comme combustible dans les moteurs Diesel présente une tendance à se cristalliser par temps froid et donc à obstruer les canalisations et les filtres, ce qui peut soit empêcher le démarrage, soit même, lors du fonctionnement par température basse ou très basse empêcher le fonctionnement du moteur.

L'invention a pour but de remédier à cet inconvénient en fournissant une installation qui permette un démarrage à froid aisé du moteur, et évite toute cristallisation de gas-oil lors d'une utilisation par temps froid et qui en outre conduit à une diminution des fumées blanches émises à froid lors du démarrage, ainsi qu'aux fumées émises à l'accélération et contenant notamment des oxydes d'azote et des hydrocarbures non brûlés. L'installation selon l'invention permet également d'obtenir une réduction de la consommation de gas-oil.

Selon le brevet US-A-3 768 454, on connaît un dispositif de réchauffage du combustible injecté dans un moteur Diesel comprenant une réserve de combustible chaud, reliée d'une part au réservoir principal et, d'autre part à une vanne thermostatique placée sur une conduite de retour de la pompe d'injection, cette vanne thermostatique connectant la conduite de retour directement à la réserve de combustible chaud au-dessous d'une température préalablement fixée du combustible, ou bien connectant, lorsque la température du combustible est supérieure à la température préalablement fixée, la conduite de retour au réservoir principal de combustible. Cependant le but de ce brevet est de piloter le carburant en fonction de la température et non selon l'invention, d'introduire le carburant à une température donnée, ce qui permet, outre la suppression des inconvénients dus aux basses températures, d'améliorer le rendement du moteur.

Le brevet US-A-2 758 579 concerne un système d'alimentation par mélange de deux carburants différents, et son but est donc totalement différent de celui de l'invention.

Le brevet US-A-3 913 543 décrit l'utilisation d'un échangeur de chaleur mais dans une installation tout à fait différente (pour moteur à combustion interne).

Cependant, aucun de ces brevets ne montre ou ne suggère la combinaison « réservoir principal-réserve chaude-échangeur de chaleur », afin d'améliorer le rendement d'un moteur Diesel.

L'invention a ainsi pour objet une installation de réchauffage du combustible injecté dans un moteur Diesel, comprenant une réserve de combustible chaud, reliée d'une part au réservoir principal et, d'autre part, à une vanne thermostatique placée sur une conduite de retour de la pompe d'injection, cette vanne thermostatique connectant la conduite de retour directement à la réserve de combustible chaud au-dessous d'une température préalablement fixée du combustible, ou bien connectant, lorsque la température du combustible est supérieure à la température préalablement fixée, la conduite de retour au réservoir principal de combustible, et elle est caractérisée en ce qu'elle comprend un échangeur de chaleur réchauffant le combustible à l'aide d'un fluide caloporteur, disposé sur la conduite entre le réservoir principal et la réserve de combustible chaud et coopérant avec cette dernière, que la réserve comporte au moins une source auxiliaire de chaleur et qu'elle est de plus disposée sur la conduite entre la vanne thermostatique et la pompe d'injection.

Selon d'autres caractéristiques :

le fluide caloporteur est constitué par les gaz chauds d'échappement du moteur ;

le fluide caloporteur est constitué par le liquide de refroidissement du moteur lorsqu'il a atteint une température minimale prédéterminée réglée entre 35 et 60 °C environ ;

le fluide caloporteur est constitué par l'huile de lubrification du moteur lorsqu'elle a atteint une température minimale prédéterminée réglée comme pour le liquide de refroidissement. On peut également utiliser une combinaison appropriée de ces fluides caloporteurs selon la puissance calorifique nécessaire pour le réchauffage ;

la vanne thermostatique est un thermostat notamment à cire qui commande la dérivation du gas-oil vers le réservoir principal à partir d'une température convenable, par exemple, de 30 à 60 °C environ, et notamment de 50 °C environ ;

le liquide de refroidissement du moteur est admis dans l'échangeur de température, au moyen d'une conduite munie d'une vanne thermostatique, lorsque sa température a atteint un niveau approprié, par exemple de 35 à 60 °C et notamment de 50 °C environ ;

la source de chaleur auxiliaire placée dans la réserve de combustible chaud est une résistance électrique alimentée par la batterie du moteur ;

la réserve de combustible chaud peut comprendre en outre une deuxième source de chaleur auxiliaire constituée d'une résistance électrique alimentée par une source d'électricité extérieure au moteur.

La commande de l'alimentation électrique de ces résistances peut être soit manuelle, soit temporisée, soit automatique.

L'invention va être décrite plus en détail ci-dessous en se référant au dessin annexé, sur lequel :

la figure 1　est une vue schématique de principe de l'installation ;

la figure 2　est une vue en coupe axiale d'un échangeur utilisé dans l'installation de la Fig. 1.

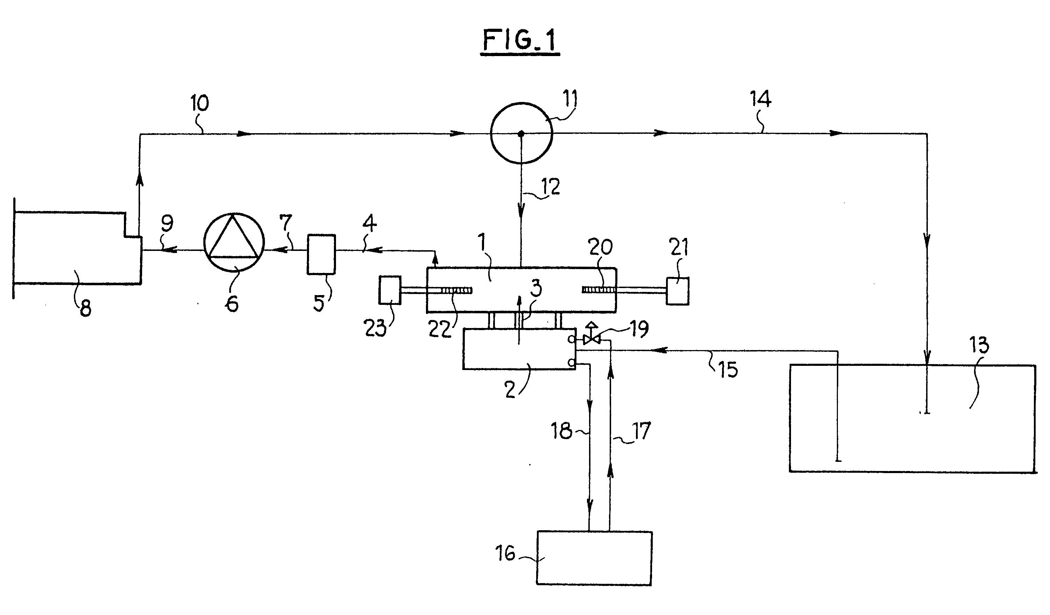

Sur la Fig. 1 illustrant le principe de fonctionnement de l'installation de réchauffage de gas-oil, une réserve éventuellement calorifugée 1 de gas-oil chaud est reliée à un échangeur de chaleur 2 par une conduite 3. La réserve de gas-oil chaud 1 est reliée par une conduite 4 à un filtre 5 de gas-oil, lui-même relié à une pompe d'alimentation 6 par une conduite 7. La pompe d'alimentation 7 alimente la pompe d'injection 8 par une conduite 9. La pompe d'injection 8 est reliée, par une conduite de retour 10 à une vanne thermostatique 11 à trois voies qui communique, d'une part avec la réserve 1, par une conduite 12, et d'autre part, avec un réservoir principal de gas-oil 13 par une conduite 14.

Du réservoir principal 13, part une conduite d'alimentation en gas-oil 15 qui est reliée à l'échangeur 2 où le gas-oil est réchauffé à l'aide d'un fluide caloporteur.

Ce fluide caloporteur est constitué par le liquide du circuit de refroidissement 16 du moteur dirigé vers l'échangeur par un circuit de dérivation 17, 18 sous la commande d'une vanne thermostatique 19.

Ainsi lors du démarrage, le liquide de refroidissement étant froid, la vanne thermostatique 19 placée sur la conduite d'alimentation 17 demeure fermée.

La réserve de gas-oil chaud comporte une première source de chaleur auxiliaire qui est une résistance électrique 20 alimentée sur le circuit électrique du moteur par une batterie 21.

Une deuxième source de chaleur 22 constituée d'une autre résistance électrique est prévue pour être alimentée sur une installation électrique 23 extérieure au moteur, par exemple le réseau d'alimentation générale en électricité lorsque le véhicule comportant le moteur est à l'arrêt.

Le gas-oil est ainsi maintenu chaud dans sa réserve calorifigée grâce à la première source de chaleur auxiliaire branchée sur la batterie 21 du moteur ou éventuellement grâce à la deuxième source de chaleur auxiliaire 22.

Au moment du démarrage la vanne 19 est fermée étant donné que l'on fixe son tarage pour que son ouverture ait lieu lorsque la température du liquide de refroidissement du moteur atteint une valeur suffisante, par exemple de 50 °C environ, afin de ne pas refroidir le gas-oil chaud circulant dans l'échangeur.

La vanne thermostatique 11 dérive alors le gas-oil circulant dans la conduite de retour 10 vers la réserve 1. En effet, on fixe également pour cette vanne thermostatique la température de changement de dérivation à 50 °C, température au-delà de laquelle le gas-oil est directement recyclé vers le réservoir 13 par la conduite 14.

Après une certaine durée de fonctionnement du moteur, la température de ce dernier s'élève entraînant une augmentation de la température du liquide de refroidissement qui franchit alors le seuil de 50 °C entraînant l'ouverture de la vanne thermostatique 19.

Le liquide de refroidissement du moteur cède alors ses calories dans l'échangeur 2 et accroît rapidement la température du gas-oil qui dépasse 50 °C, ouvrant à son tour la vanne thermostatique 11 sur la conduite de retour 14 vers le réservoir principal 13.

On observe alors une élévation de la température de l'ensemble du gas-oil contenu dans le réservoir 13 jusqu'à une valeur voisine de la température du liquide de refroidissement du moteur qui est en régime de fonctionnement continu de l'ordre de 80 °C.

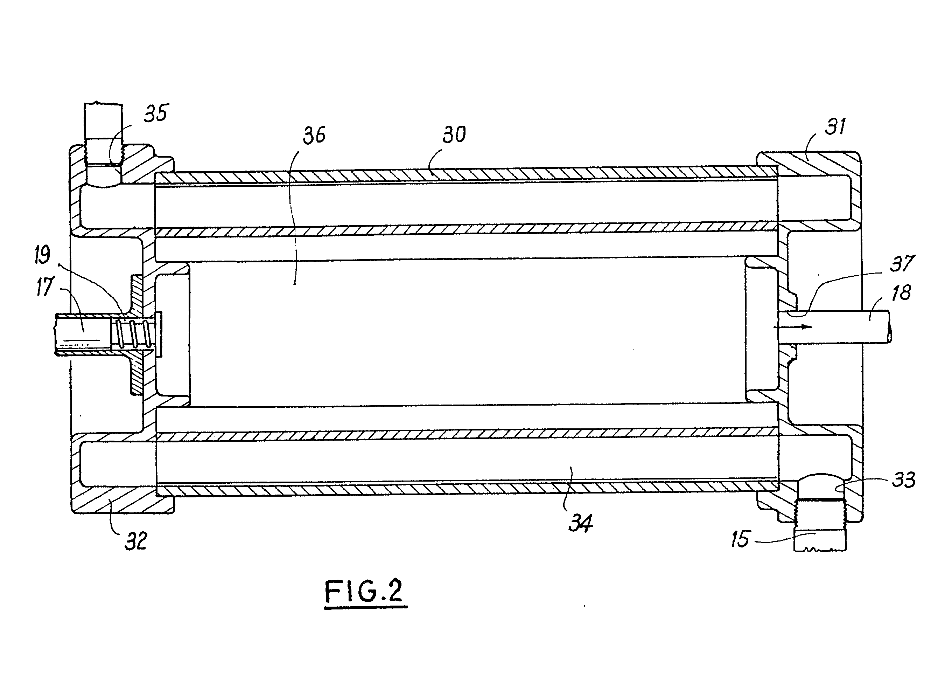

L'échangeur utilisé dans l'installation que l'on vient de décrire et qui est représenté en coupe à la Fig. 2 comprend un corps 30 en aluminium ou autre matériau convenable dans lequel sont délimités deux circuits tubulaires coaxiaux, respectivement, pour le gas-oil et le liquide de refroidissement du moteur. Le corps 30 est fermé à chacune de ses extrémités par deux flasques 31 et 32. Le flasque 31 comporte un orifice 33 dans lequel débouche la conduite d'arrivée 15 du gas-oil. Le trajet du gas-oil comprend à partir de l'orifice d'arrivée 33 un conduit tubulaire 34 relié à un orifice de sortie 35 ménagé dans le flasque 32.

Le trajet du liquide de refroidissement du moteur comprend à partir du conduit d'arrivée 17 une vanne thermostatique 19 et un conduit cylindrique 36 disposé concentriquement à l'intérieur du conduit 34, puis un orifice 37 débouchant dans la conduite 18 de retour du fluide de refroidissement vers le moteur. Dans cet échangeur, les deux fluides entre lesquels s'effectue l'échange thermique circulent à contre-courant.

Bien entendu cet échangeur n'a été décrit qu'à titre d'exemple et pourrait être remplacé par tout échangeur d'un type convenable.

**Revendications**

1. Installation de réchauffage du combustible injecté dans un moteur Diesel comprenant une réserve (1) de combustible chaud, reliée d'une part, au réservoir principal (13) et, d'autre part, à une vanne thermostatique (11) placée sur une conduite de retour (10) de la pompe d'injection (8), cette vanne thermostatique (11) connectant la conduite de retour (10) directement à la réserve (1) de combustible chaud au-dessous d'une température préalablement fixée du combustible, ou bien connectant, lorsque la température du combustible est supérieure à la température préalablement fixée, la conduite de retour (10) au réservoir principal (13) de combustible, installation caractérisée en ce qu'elle comprend un échangeur de chaleur (2) réchauffant le combustible à l'aide d'un fluide caloporteur, disposé sur la conduite entre le réservoir principal (13) et la réserve (1) de combustible chaud et coopérant avec cette dernière, que la réserve (1) comporte au moins une source auxiliaire de châleur (20) et qu'elle est de plus disposée sur la conduite entre la vanne thermostatique (11) et la pompe d'injection (8).

2. Installation selon la revendication 1, caractérisé en ce que la vanne thermostatique est un thermostat à cire qui commande la dérivation du combustible vers le réservoir principal à partir d'une température réglée entre 30 à 60 °C environ.

3. Installation selon la revendication 1 ou 2, caractérisée en ce que le fluide caloporteur est le liquide de refroidissement du moteur qui est admis dans l'échangeur de température au moyen d'une conduite munie d'une vanne thermostatique lorsque sa température a atteint une valeur prédéterminée réglée entre 35 et 60 °C environ.

4. Installation selon la revendication 1 ou 2, caractérisée en ce que le fluide caloporteur est constitué par les gaz d'échappement du moteur.

5. Installation selon la revendication 1 ou 2, caractérisée en ce que le fluide caloporteur est constitué par l'huile de lubrification du moteur.

6. Installation selon l'une des revendications précédentes, caractérisée en ce que la source de chaleur auxiliaire placée dans la réserve de combustible chaud est une résistance électrique alimentée par la batterie du moteur.

7. Installation selon l'une quelconque des revendications précédentes, caractérisée en ce que la réserve de combustible chaud comprend en outre une deuxième source de chaleur auxiliaire constituée d'une résistance électrique alimentée par une source d'électricité extérieure au moteur.

## Claims

1. An apparatus for heating fuel injected into a Diesel engine, comprising a reserve supply (1) of hot fuel connected, on one hand, to the main tank (13) and, on the other hand, to a thermostat valve (11) inserted in a return conduit (10) of the injection pump (8), this thermostat valve (11) connecting the return conduit (10) directly to the reserve supply (1) of hot fuel below a previously-determined temperature of the fuel, or connecting, when the temperature of the fuel is higher than the previously-determined temperature, the return conduit (10) to the main fuel tank (13), said apparatus being characterised in that it comprises a heat exchanger (2) heating the fuel by means of a heat-carrying fluid, disposed in the conduit between the main tank (13) and the reserve supply (1) of hot fuel and cooperating with the latter, the reserve supply (1) comprises at least one auxiliary source of heat (20) and it is moreover disposed in the conduit between the thermostat valve (11) and the injection pump (8).

2. An apparatus according to claim 1, characterised in that the thermostat valve is a wax thermostat valve which controls the by-passing of the fuel to the main tank beyond a temperature adjusted to between about 30 and about 60 °C.

3. An apparatus according to claim 1 or 2, characterised in that the heat-carrying fluid is the cooling liquid of the engine which is admitted into the temperature exchanger by way of a pipe provided with a thermostat valve when its temperature has reached a predetermined value adjusted to between about 35 and about 60 °C.

4. An apparatus according to claim 1 or 2, characterised in that the heat-carrying fluid is constituted by the exhaust gases of the engine.

5. An apparatus according to claim 1 or 2, characterised in that the heat-carrying fluid is constituted by the lubricating oil of the engine.

6. An apparatus according to one of the preceding claims, characterised in that the auxiliary source of heat placed in the reserve supply of hot fuel is an electric resistance supplied with current by the battery of the engine.

7. An apparatus according to any one of the preceding claims, characterised in that the reserve supply of hot fuel further comprises a second auxiliary source of heat constituted by an electric resistance supplied with current by a source of electricity outside the engine.

## Patentansprüche

1. Brennstoffvorwärmsystem für einen Dieselmotor mit einem Vorrat (1) für warmen Brennstoff, der einerseits mit einem Haupttank (13) und andererseits mit einem Thermostatventil (11) verbunden ist, das in der Rücklaufleitung (10) der Einspritzpumpe (8) angeordnet ist, wobei das Thermostatventil (11) die Rückleitung (10) direkt mit dem Vorrat (1) für warmen Brennstoff bei einer unterhalb einer vorbestimmten Temperatur des Brennstoffs liegenden Temperatur oder die Rückleitung (10) mit dem Haupttank (13) für den Brennstoff verbindet, wenn die Temperatur des Brennstoffs über der vorbestimmten Temperatur liegt, dadurch gekennzeichnet, daß ein Wärmetauscher (2) vorgesehen ist, der den Brennstoff mit Hilfe eines Wärmeträgerfluids vorwärmt und der in der Leitung zwischen dem Haupttank (13) und dem Vorrat (1) für den warmen Brennstoff angeordnet ist, sowie mit demselben derart zusammenarbeitet, daß der Vorrat (1) wenigstens eine Hilfswärmequelle (20) bildet, und daß ferner dieser in der Leitung zwischen dem Thermostatventil (11) und der Einspritzpumpe (8) angeordnet ist.

2. Brennstoffvorwärmsystem nach Anspruch 1, dadurch gekennzeichnet, daß das Thermostatventil ein Wachsthermostat ist, der die Abzweigung des Brennstoffs zum Haupttank, ausgehend von einer Temperatur steuert, die bei der Regelung zwischen etwa 30 bis 60° liegt.

3. Brennstoffvorwärmsystem nach Anspruch 1 oder 2, dadurch gekennzeichnet, daß das Wärmeträgerfluid die Motorkühlflüssigkeit ist, die dem Wärmetauscher mit Hilfe einer Leitung zugeführt wird, die mit einem Thermostatventil versehen ist, wenn die Temperatur einen vorbestimmten Wert erreicht hat, der etwa zwischen 35 und 60° liegt.

4. Brennstoffvorwärmsystem nach Anspruch 1 oder 2, dadurch gekennzeichnet, daß das Wärmeträgerfluid vom Abgas des Motors gebildet wird.

5. Brennstoffvorwärmsystem nach Anspruch 1 oder 2, dadurch gekennzeichnet, daß das Wärmeträgerfluid vom Schmieröl des Motors gebildet wird.

6. Brennstoffvorwärmsystem nach einem der vorangehenden Ansprüche, dadurch gekennzeichnet, daß die Hilfswärmequelle, die im Vorrat für den warmen Brennstoff angeordnet ist, ein elektrischer Widerstand ist, der durch die Batterie des Motors gespeist wird.

7. Brennstoffvorwärmsystem nach einem der vorangehenden Ansprüche, dadurch gekennzeichnet, daß der Vorrat des warmen Brennstoffs ferner eine zweite Hilfswärmequelle aufweist, die von einem elektrischen Widerstand gebildet wird, der von einer elektrischen Stromquelle außerhalb des Motors gespeist wird.

FIG.1

FIG.2